(19) Europäisches Patentamt
European Patent Office
Office européen des brevets

(11) **EP 3 076 289 B1**

(12) **EUROPEAN PATENT SPECIFICATION**

(45) Date of publication and mention
of the grant of the patent:
**24.01.2018 Bulletin 2018/04**

(51) Int Cl.:
**G06F 17/30** (2006.01)  **G06F 9/44** (2018.01)

(21) Application number: **16161292.4**

(22) Date of filing: **18.03.2016**

(54) **METHOD, PROGRAM, AND APPARATUS, FOR MANAGING A STORED DATA GRAPH**

VERFAHREN, PROGRAMM UND VORRICHTUNG ZUR VERWALTUNG EINES GRAPHS VON GESPEICHERTEN DATEN

PROCÉDÉ, PROGRAMME ET APPAREIL PERMETTANT DE GÉRER UN GRAPHE DE DONNÉES STOCKÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.03.2015 GB 201504781**

(43) Date of publication of application:
**05.10.2016 Bulletin 2016/40**

(73) Proprietor: **FUJITSU LIMITED**
**Kawasaki-shi,**
**Kanagawa 211-8588 (JP)**

(72) Inventors:
• **LEE, Vivian**
**Bracknell, Berkshire RG42 2QP (GB)**
• **HU, Bo**
**Winchester SO23 7DT (GB)**
• **MENDAY, Roger**
**Guildford, Surrey GU1 1YB (GB)**

(74) Representative: **Hutchison, James**
**Haseltine Lake LLP**
**300 High Holborn**
**London, Greater London WC1V 7JH (GB)**

(56) References cited:
• **Pramod Bhatotia ET AL: "Large-scale Incremental Data Processing with Change Propagation", HotCloud'11 Proceedings of the 3rd USENIX conference on Hot topics in cloud computing, 1 January 2011 (2011-01-01), XP055071375, Berkeley, CA, USA Retrieved from the Internet: URL:http://www.mpi-sws.org/~iakkus/papers/2011-hotcloud-bhatotia.pdf [retrieved on 2013-07-15]**

## Description

The present invention lies in the field of graph data storage and processing. In particular, the present invention relates to techniques for controlling the data modification functionality made available to users of an RDF data graph.

In the current Big Data era, heterogeneous data are produced in huge quantity everyday. To be able to effectively analyse the data, hence deriving more meaningful knowledge and information, a good data processing and integration strategy is crucial. Linked Data is known for its flexible data structure nature and the connectivity among different datasets, it is thus the best candidate for facilitating data processing in Big Data across a plethora of data sets.

Linked Data is a way of publishing structured data that can explicitly represent interconnections among data. Such interconnections are in the form of (*subject, predicate, object*) and are normally coded according to the Resource Description Framework (RDF) standard. Linked Data is widely adopted for publishing data services in both the public and private domains. Ideally, Linked Data provides a transparent, semantic-enhanced layer for describing data and data services. This, however, does not fundamentally address the data/functionality interoperability issues which become more evident when given the sheer size of Big Data or Big Linked Data. Functionality interoperability refers to the ability and effectiveness of a data service to provide self-explanatory and intuitive interface for the consumption of both humans and machines.

Inspecting the functionality interoperability in the area of Big Data processing in general and that of Linked Data in particular, the following inefficiencies are identified:

- Transparency of functionalities: in most cases, the data processing capacities are packed in an application specific way. For people with little knowledge of the target domain, discovery and invocation of the data processors become difficult.
- Control flow: A control flow needs to pre-define functions and the order of execution of those function, this again requires users to have extensive knowledge of the subject domain. Another significant drawback also lies in the lack of efficiency: i) control flow-based approach puts the concurrency task on the shoulders of programmers; ii) it is rigid and is against the flexible and extensible requirements of data processing with respect to Big Data and Linked Data.

Pramod Bhatotia ET AL: "Large-scale Incremental Data Processing with Change Propagation", Hot-Cloud'11 Proceedings of the 3rd USENIX conference on Hot topics in cloud computing, 1 January 2011 (2011-01-01), XP055071375, Berkeley, CA, USA, discloses extending the MapReduce framework with change propagation, where the framework keeps track of the dependencies between subsets of each MapReduce computation, and, upon changing of a subset of the input, rebuilds only the parts of the computation and the output affected by the changes. An extension to the Hadoop architecture supports change propagation.

Embodiments include a data storage apparatus configured to store a data graph representing interconnected resources, the data graph being encoded as a plurality of data items, each data item comprising a value for each of: a subject, being an identifier of a subject resource; an object, being either an identifier of an object resource or a literal value; and a predicate, being a named relationship between the subject and the object; a dynamic dataflow controller configured to store a plurality of processor instances, each processor instance specifying an input range, a process, and an output range, each processor instance being configured, when triggered by the provision of an input comprising a data item falling within the input range, to generate an output comprising a data item falling within the output range, by performing the specified process on the input; the dynamic dataflow controller being further configured to respond to a data modification event involving a data item falling within the input range of one of the stored processor instances by providing the data item involved in the data modification event to the one of the stored processor instances as the input; wherein the dynamic dataflow controller is further configured, following the generation of the output by the triggered processor instance, to provide a data item comprised in the output as the input to any processor instance, from among the plurality of processor instances, specifying an input range covering the data item comprised in the output.

Advantageously, embodiments provide a mechanism to link functions (processor instances) that operate on data items in a datastore in order to establish dataflows between linked functions. The dataflows need not be explicitly taught to the system by a user, because the specification of inputs and outputs enables the dynamic dataflow controller to establish when the output of one processor instance can be provided as the input of another processor instance. The output is provided to the next processor instance directly, that is to say, the output is provided both to the data graph and to the next processor instance, so that the next processor instance does not wait for the output to be written back to the data graph before being triggered.

The data graph comprises class definitions as well as instantiations of the defined classes, and hence may be considered to include an ontology.

The data items may be triples or specifically RDF triples. A triple is a data item having a value for each of three elements, in this case, subject, predicate, and object. Optionally, data items may comprise values for more than three elements, but include at least a value for each of those three elements, subject, predicate, and object.

The identifiers of the subject and object resources may be URIs linking to storage locations. The storage locations may be on the data storage apparatus or may be external to the data storage apparatus. A resource may be represented exclusively by the data items having an identifier of the resource as the subject. Alternatively, a resource may be represented by the data items having an identifier of the resource as the subject, in addition to further data located at the URI indicated by the subject of those data items.

The processor instances may be specified by RDF statements. The RDF statements may be input by a user via a user interface. For example, a processor type may be specified by an RDF statement, which may enable the process to be established based on a predetermined set of processor types (or classes) available to the dynamic dataflow controller. The output and input ranges may also be specified by RDF statements. For example, it may be that input and output are both defined as RDF classes, with each being instantiated by a particular input range. An instance having the input range required for a processor instance may then be specified as the input of the processor instance. The output range may be determined on an automated basis by the dynamic dataflow controller by determining the range of outputs that are possible based on the specified inputs and the specified process. The specified process is a portion of code or set of processing instructions that cause one or more output data items to be generated based on one or more input data items. It is possible that there are inputs and outputs in addition to the data items.

The input range specified by a processor instance defines the range of values that data items must fall within to be accepted as an input to the processor instance. A value or range of values for one or more elements (an element being each of subject, predicate, and object) may be specified as an input range, with an assumption that an element for which no value or range of values is specified can take any value. A data modification event involving a data item falling within the input range is of interest to the processor instance, and, pending other criteria being satisfied (if any exist), it is the data modification event that causes the data item to be provided to the processor instance and the processor instance to be triggered. Such other criteria may include, for example, a specification of the particular types or categories of data modification event that should occur in order for the data item falling within the input range to be provided to the processor instance as an input (or as part of an input).

The specification of the output for a processor instance has two potential uses. Firstly, it can serve as the basis for validation, because if the output range specified by a processor instance is inconsistent with the ontology definition stored as part of the data graph on the data storage apparatus, then an alert can be raised that the processor instance needs to be modified. Alternatively, it could serve as an alert that the ontology definition would benefit from extension and/or amendment. Secondly, the specification of the output enables the dynamic dataflow controller to spot when the output of one processor instance will fall within the input range of another processor instance. A link between these two processor instances is then maintained by the dynamic dataflow controller so that, at runtime, the another processor instance can be provided the output of the one processor instance as an input without the delay that would be caused by simply writing the output back to the data graph and waiting for the data modification to be detected and then provided to the another processor instance.

The dynamic dataflow controller may be configured to transmit output data items to the data storage apparatus for addition to the data graph.

A data management apparatus of an embodiment may further comprise a data state modification detector configured to detect a data modification event involving a data item stored on the data storage apparatus and covered by the specified input range of one of the plurality of processor instances, and provide the data item involved in the detected data modification event to the dynamic dataflow controller.

Data state modification events may also be referred to as data modification events, data transformation events, or data state transformation events. The role of the data state modification detector is to observe the state of the data graph stored on the data storage apparatus and to notify the dynamic dataflow controller of data modification events involving data items which fall within an input range specified by a stored processor instance. The input range may be specified explicitly in the creation of a new processor instance. Alternatively, inputs may be defined by statements from users that define an input range, the input range acting as an instruction to the data state modification detector to monitor data items falling within the input range (and/or to monitor all instances in a class which according to the ontology definition may be the subject of a data item falling within the input range), and to provide new or modified data items to the dynamic dataflow controller. Such statements may define a label for the input range, and processor instances may specify their input range by the defined label.

For example, if a new object value is added to the data graph in a data item having a predicate value matching a predicate value specified by a processor instance as an input range, then the new object value (which may occur via modification of an existing value or by addition of a new data item) is a data modification event which is detected by the data state modification detector and reported to the dynamic dataflow controller.

Optionally, data modification events may be characterised into types, so that each data modification event is characterised as one of a predetermined set of data modification event types, and the data state modification detector is configured to provide the data item involved in the detected data modification event to the dynamic data controller along with an indication of which one of the set of data modification event types was detected.

In detail, data modification event types may be some or all of: the amendment of, or addition of a new, object value in a data item falling within the input range; local transformations, that involve the subject of a resource, for example, creation of a new subject resource, deletion of an existing subject resource, modification of the resource, or modification of attributes of the subject resource; and/or connection transformations, including the deletion, creation of new, or modification of attributes of, interconnections between resources represented by the data graph.

The definition of a predetermined set of data modification event types may also be reflected in the functionality of the processors, insofar as the data modification event types in the predetermined set that the data state modification detector is configured to detect may also determine the data modifications that can be carried out by processor instances.

Data modification event types may be grouped into two subsets as follows:

- Local transformation: deletion, creation, modification of attributes, of data items (resources represented by the data graph)
- Connection transformation: deletion, creation, modification of attributes, of data linkages (interconnections between resources represented by the data graph).

The definition of a limited number of permissible data transformations can significantly reduce the necessary number of data processors and increase the reuse of atomic data processing units. It also simplifies the consumption of such functionalities by machines through a simplified interface.

The reporting or notifying performed by the data state modification detector may be carried out in a number of ways. For example, the data state modification detector may be configured to provide the data item involved in the detected data modification event to the dynamic dataflow controller as a modification event data item also including an indication of which one of the set of data modification event types was detected and an indication of the time of the detected data modification event; and the dynamic dataflow controller may then be configured to add the provided modification event data items to a queue from which modification event data items are removed when the included data item is provided as an input to one or more of the processor instances and/or when it is determined by the dynamic dataflow controller not to provide the included data item to any of the processor instances.

The data state modification detector monitors/observes the data items stored in the data storage apparatus, but cannot make any modifications thereto.

So by providing a data item involved in a detected data modification event to the dynamic dataflow controller, a copy of the relevant data item is made. Depending on the implementation and the type of data modification event, the data state modification detector may be configured to provide the data item pre- or post-modification, or both. For example, the data state modification detector may be configured such that if the type of the detected event is a deletion event, the pre-modification data item is provided. As a further example, if the detected event is of type involving a modification of the object value of a data item (e.g. the modification of an attribute or creation of a new attribute), then the post-modification data item is provided.

The queue may be managed in a first-in-first-out manner. However, a more complex implementation may be a first-in-first-out with exceptions, for example, an exception may be that if the data modification event is at a class level (i.e. relates to the ontology definition itself rather than to instances of classes defined in the ontology definition), then the event data item relating to the class level event is moved in front of any non-class (instance-) level event data items in the queue.

There are some examples of data modification events that the entity (assumed to be the dynamic dataflow controller) responsible for managing the queue of data modification event data items may remove before they are processed. For example, the dynamic dataflow controller may be configured to identify pairs of modification event data items in the queue which include semantically equivalent data items, and to remove one of the pair from the queue without providing the data item from the removed data item to a processor instance.

Advantageously, processing time and clashing or duplicated outputs are avoided in this manner. Further examples include identifying when an event of a data creation type is succeeded by an event of a data deletion type for a matching data item. In that case, it may be assumed that the data item was created in error and hence no processing is necessary. In addition, and in embodiments in which data modification event data items are time stamped, it may be that a minimum time between creation and deletion of a matching data item is defined, and if the difference between the time stamps is below the minimum time, then both data modification event data items are removed from the queue.

It is noted that although the queue of data modification event data items and its management are attributed to the dynamic dataflow controller, such functionality can equally be attributed to the data state modification detector, or to a specific queue management component at an interface between the dynamic dataflow controller and the data state modification detector.

The dynamic dataflow controller may apply additional criteria in determining whether to trigger a processor instance by providing the data item of a data modification event data item to the processor instance as an input than simply whether or not the data item falls within the input range specified by the processor instance. For example, the processor instance may specify a limited set of data modification event types in response to which it will be triggered, and the dynamic dataflow controller may therefore only provide data items from modification event data items of a modification type within the limited set of data modification event types specified by the particular processor instance.

In a particular example, one or more of the processor instances each specify a subset of the set of data modification event types, the dynamic dataflow controller being configured to respond to the detection of a data modification event involving a data item falling within the input range of one of the one or more processor instances specifying a subset of the set of data modification events by: if the indication is that the detected data modification event is of a type falling within the subset specified by the one of the processor instances, triggering the processor instance by providing the data item to the processor instance; and if the indication is that the detected data modification event is of a type falling outside of the subset specified by the one of the processor instances, blocking the data item from being provided to the processor instance.

Blocking the data item from being provided to the processor instance is equivalent to simply not providing the input including the data item to the processor instance.

In order to facilitate the addition of new processor instances by users, and to reduce the design-time burden imposed by adding new processor instances, it may be that a set of generic processors are stored at a location accessible to the dynamic dataflow controller, and the generic processors instantiated by processor instances.

Embodiments may further comprise a generic processor repository configured to store a set of class level processor entities that each define a generic input data item, a generic output data item, and a set of processing instructions; and a processor instantiation interface configured to receive instructions to instantiate a class level processor entity, the instructions including a selection of a class level processor entity from the set of class level processor entities, and a specified input range. In such cases, the dynamic dataflow controller may be configured to store, as a processor instance, the specified input range, the set of processing instructions of the selected class level processor entity as the specified process of the processor instance, and a specified output range corresponding to the specified input range.

The processor instantiation interface is a mechanism to receive statements or instructions in any other form input by a user. The user may require specific permissions to enable the creation of new processor instances, and users may be restricted in terms of the processor instances that they are permitted to create. Each class level processor entity may broadcast or make available upon querying the range of instantiation options available, so that a user can determine how to configure the processor instance being created.

The specified output range corresponding to the specified input range may be input by the user and received via the processor instantiation interface. Alternatively, the dynamic dataflow controller may be configured to calculate or otherwise logically determine the output range based on the specified input range and the processing instructions. For example, if the input range is defined by a particular predicate value, but the other data item elements are undefined, and the processing instructions generate an output data item having a fixed predicate value, a subject value matching that of the input data item (which is undefined), and an object value calculated by a processing operation performed on the object value of the input data item (which is also undefined), then it can be logically determined by the dynamic dataflow controller that the output range is defined by the fixed predicate value of the output data item, and that the subject value and object value are undefined.

In addition to instantiating the class level processor entity by specifying an input range, it may be that the processing instructions carried out by the processor instance can also be specified or otherwise limited from a plurality of options. For example, it may be that the set of processing instructions defined for the selected class level processor entity are configurable in terms of the process that they cause to be performed, and the received instructions include one or more configuration instructions defining how the set of processing instructions are configured in the processor instance.

As a simple example, a class level processor entity may be a multiplier, configured to multiply numeric object values of input data items by a fixed number in order to generate the object value of an output data item, with the fixed number being configurable at instantiation under instruction of a user. As another example, a processor may be configured to accept as input all data items having a particular predicate value (whenever any one of those data items is modified or a new one created) and to output a list of the top x when ranked according in ascending numeric order of object value, with the x being configurable at instantiation under instruction of a user. It may be that such configurable processing steps have default values which are implemented at instantiation if no alternative is provided.

The processor instantiation interface may be configured to receive RDF statements entered via a dialog box or stored to a particular location by a user. Alternatively the processor instantiation interface may be a graphical user interface, comprising a visual representation of at least a portion of the stored data graph and at least a portion of the stored processor instances having input ranges which cover any of the data items encoding said portion of the stored data graph, and enabling an input range and/or a process of a new processor instance to be specified by selection from the visual representation.

Advantageously, the visual representation of a portion of the stored data graph and visual representation of the stored processor instances enable a user to quickly appreciate processing operations that already exist for a visualised portion of the data graph. The graphical user interface allows a user to select an input range by identifying graph entities that are within the input range of a new processor instance. The user may be presented with options regarding how wide or narrow the input range should be. Existing processor instances may be copied and modified, and the input/output of the new processor instance may be specified by selecting the input/output of existing processor instances, in order to create dataflows via the graphical user interface.

As a particular example of how input ranges may be specified, the input range specified by a processor instance is specified by a value range for the predicate and/or by a value range for the subject, a data item being deemed to fall within the input range by having a predicate value falling within the specified predicate value range and/or a subject value falling within the subject value range.

In this particular example, the value range for the predicate is defined and the value ranges for the subject and object are undefined. If P1 is a particular predicate value, the input range may be represented by the form <?S P1 ?O>, with the ? indicating a wildcard or undefined value for the subsequent element (S for subject, O for object).

Similarly, the output range specified by a processor instance is specified by a value range for the predicate and/or by a value range for the subject, a data item being deemed to fall within the output range by having a predicate value failing within the specified predicate value range and/or a subject value falling within the subject value range.

A network of dependencies is generated by the links or interconnections between the stored data graph and the processor instances that accept inputs from, and write outputs to, the stored data graph. A dependency link may be considered to exist between a processor instance and data items (or the subjects of data items) within the input range of the processor instance, between a processor instance and data items (or the subjects of data items) output to the data graph by the processor instance, and between pairs of processor instances for which the output range of one of the pair is within the input range of the other of the pair.

Such a network of dependencies may be explicitly maintained. As a mechanism for doing so, the dynamic dataflow controller may further comprise a dependency graph, in which each of the processor instances is represented by a processor node, and, for each processor instance, each resource in the data graph stored by the data storage apparatus which is the subject resource of a data item covered by the input range specified for the processor instance is represented by a resource node connected to the processor node representing the processor instance as an input, and, each resource in the data graph stored by the data storage apparatus which is the subject resource of a data item covered by the output range specified for the processor instance is represented by a resource node connected to the processor node representing the processor instance as an output.

Advantageously, the dependency graph maintains a record of data dependencies and the flow of data between the stored data graph and the processor instances stored by the dynamic dataflow controller. Existing algorithms can be applied in order to detect cycles among processor instances (functions) and stored data items (resources), such cyclic dependencies can be alerted to a user (such as an administrator) and amended/corrected. Such algorithms include Tarjan's algorithm with a complexity of O(V+E), in which, in describing a generic graph, V is the set of vertices or nodes and E is the set of edges or arcs.

Embodiments of another aspect of the present invention include a data management method, comprising: storing a data graph representing interconnected resources, the data graph being encoded as a plurality of data items, each data item comprising a value for each of: a subject, being an identifier of a subject resource; an object, being either an identifier of an object resource or a literal value; and a predicate, being a named relationship between the subject and the object; storing a plurality of processor instances, each processor instance specifying an input range, a process, and an output range, each processor instance being configured, when triggered by the provision of an input comprising a data item falling within the input range, to generate an output comprising a data item falling within the output range, by performing the specified process on the input; responding to a data modification event involving a data item falling within the input range of one of the stored processor instances by providing the data item involved in the data modification event to the one of the stored processor instances as the input; and following the generation of the output by the triggered processor instance, providing a data item comprised in the output as the input to any processor instance, from among the plurality of processor instances, specifying an input range covering the data item comprised in the output.

As an exemplary embodiment, the data management apparatus may comprise a data storage apparatus configured to store a data graph representing interconnected resources, the data graph being encoded as a plurality of data items, each data item comprising a value for each of: a subject, being an identifier of a subject resource; an object, being either an identifier of an object resource or a literal value; and a predicate, being a named relationship between the subject and the object; a dynamic dataflow controller configured to store a plurality of processor instances, each processor instance specifying an input predicate value, a process, and an output predicate value, each processor instance being configured, when triggered by the provision of an input including a data item having the specified input predicate value, to generate, an output including as an output data item, a data item having the specified output predicate value by performing the specified process on the input data item; a data state modification detector configured to detect when a new object value is added to the data graph in a data item having a predicate value matching the input predicate value specified by a processor instance from among the plurality of processor instances, and to report the data item having the new object value to the dynamic dataflow controller; the dynamic dataflow controller being further configured to respond to the report of the data item having the new object value by providing the reported data item as the input to the or each processor instance specifying an input predicate value matching the predicate value of the reported data item; wherein the dynamic dataflow controller is further configured, following the generation of an output data item by triggered processor instances, to provide the output data item as the input to any processor instance, from among the plurality of processor instances, specifying an input predicate value matching the predicate value of the output data item.

Optionally, the plurality of processor instances includes a processor instance specifying more than one input predicate value and/or one or more output predicate values, the processor instance being configured, when triggered by the provision of an input having: a data item having one of the more than one specified input predicate values; a plurality of data items having a predetermined plurality from among the more than one specified input predicate values; or a plurality of data items having each of the specified input predicate values; to generate, as the output: a data item having one of the more than one specified output predicate values; a plurality of data items having a predetermined plurality from among the more than one specified output predicate values; or a plurality of data items having each of the specified output predicate values.

Embodiments of another aspect include a computer program which, when executed by a computing apparatus, causes the computing apparatus to function as a computing apparatus defined above as an invention embodiment.

Embodiments of another aspect include a computer program which, when executed by a computing apparatus, causes the computing apparatus to perform a method defined above or elsewhere in this document as an invention embodiment.

Furthermore, embodiments of the present invention include a computer program or suite of computer programs, which, when executed by a plurality of interconnected computing devices, cause the plurality of interconnected computing devices to perform a method embodying the present invention.

Embodiments of the present invention also include a computer program or suite of computer programs, which, when executed by a plurality of interconnected computing devices, cause the plurality of interconnected computing devices to function as a computing apparatus defined above or elsewhere in this document as an invention embodiment.

Embodiments include a sensor network comprising a data management apparatus according to an embodiment, and a plurality of sensors, each sensor comprising communication means for communicating data to the data management apparatus; wherein each of the plurality of sensors is a resource represented by the data graph identifiable by a subject value among the plurality of interconnected data items; the sensor being configured to perform a measurement of a physical property, to generate data representing the measurement, and to communicate the data to the data management apparatus; the data management apparatus being configured to receive the data and to add a new data item to the data graph comprising the subject value identifying the sensor at which the data was generated as the subject, and the data as the object, the addition of the new data item to the data graph being a data modification event; (the predicate indicating that the object is a measurement or reading or identifying the physical property) in the case that a first processor instance from among the plurality of processor instances specifies an input range including the new data item, said first processor instance is configured to perform the specified process on the data item as an input in order to generate a further data item as the output; and in the case that a second processor instance from among the plurality of processor instances specifies an input range including the further data item, the dynamic dataflow controller is configured to provide the further data item to the second processor instance as an input.

Optionally, the process specified by the first processor instance is a process for normalising, standardising, or otherwise converting the object of the new data item, the further data item comprising as an object the processed object of the new data item.

Optionally, the process specified by the second processor instance is a process for analysing, aggregating, and/or comparing the object of a plurality of input data items.

Preferred features of the present invention will now be described, purely by way of example, with reference to the accompanying drawings, in which:-

Figure 1 is a schematic illustration of a data management apparatus of an embodiment;
Figure 2 is a schematic illustration of a data management apparatus of another embodiment;
Figure 3 is a schematic illustration of a data management apparatus of another embodiment;
Figure 4 illustrates a variation on the data management apparatus of Figure 3 and is annotated with exemplary method steps;
Figure 5 illustrates the functionality of an exemplary processor instance;

Figure 6 illustrates the functionality of two exemplary processor instances linked to form a dataflow;

Figure 7 illustrates dependencies between processor instances and a data graph; and

Figure 8 illustrates a hardware configuration of an embodiment.

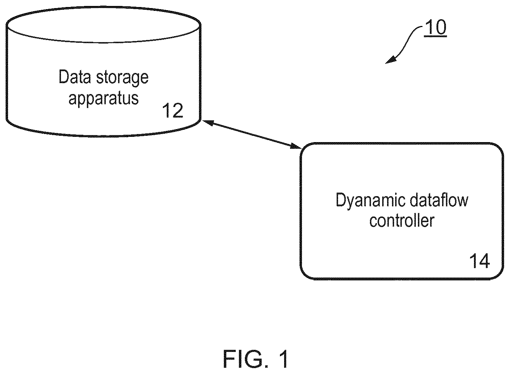

Figure 1 illustrates a data management apparatus 10 embodying the present invention. The data management apparatus 10 comprises a data storage apparatus 12 and a dynamic dataflow controller 14. The data management apparatus in Figure 1 is illustrated in terms of functional components. In terms of hardware components, the data management apparatus 10 may be considered to comprise a data storage apparatus, a processor, and a memory. Wherein, the data storage apparatus 12 can be realised via hardware comprising a data storage apparatus. The dynamic dataflow controller 14 can be realised via hardware comprising a data storage apparatus (to store processor instances), a processor (to execute processing instructions), and a memory (for the storage of data during the execution of processing instructions).

The data management apparatus 10 is configured to store data and to execute processing instructions which modify the state of the stored data, and hence the management performed by the data management apparatus 10 comprises at least storage and modification.

The data storage apparatus 12 is configured to store data, and to provide an interface by which to allow read and write accesses to be made to the data. Specifically, the data storage apparatus 12 is configured to store a data graph representing interconnected resources, the data graph being encoded as a plurality of data items, which in this particular example are triples, each triple comprising a value for each of: a subject, being an identifier of a subject resource; an object, being either an identifier of an object resource or a literal value; and a predicate, being a named relationship between the subject and the object. The triples may be RDF triples (that is, consistent with the Resource Description Format paradigm) and hence the data storage apparatus 12 may be an RDF data store. The data storage apparatus 12 may be a single data storage unit or may be an apparatus comprising a plurality of interconnected individual data storage units each storing (possibly overlapping or even duplicated) portions of the stored graph, or more specifically the triples encoding said portions of the stored graph. Regardless of the number of data storage units composing the data storage apparatus 12, the data graph is accessible via a single interface or portal to the dynamic dataflow controller 14 and optionally to other users. Users in this context and in the context of this document in general may be a human user interacting with the data storage apparatus 12 via a computer (which computer may provide the hardware realising some or all of the data storage apparatus 12 or may be connectable thereto over a network), or may be an application hosted on the same computer as some or all of the data management apparatus 10 or connectable to the data management apparatus 10 over a network (such as the internet), said application being under the control of a machine and/or a human user.

The data storage apparatus 12 may be referred to as an RDF store. The dynamic dataflow controller 14 may be referred to as a dynamic dataflow engine.

The triples provide for encoding of graph data by characterising the graph data as a plurality of subject-predicate-object expressions. In that context, the subject and object are graph nodes of the graph data, and as such are entities, objects, instances, or concepts, and the predicate is a representation of a relationship between the subject and the object. The predicate asserts something about the subject by providing a specified type of link to the object. For example, the subject may denote a Web resource (for example, via a URI), the predicate denote a particular trait, characteristic, or aspect of the resource, and the object denote an instance of that trait, characteristic, or aspect. In other words, a collection of triple statements intrinsically represents directional graph data. The RDF standard provides formalised structure for such triples.

The Resource Description Framework is a general method for conceptual description or modeling of information that is a standard for semantic networks. Standardising the modeling of information in a semantic network allows for interoperability between applications operating on a common semantic network. RDF maintains a vocabulary with unambiguous formal semantics, by providing the RDF Schema (RDFS) as a language for describing vocabularies in RDF.

Optionally, each of one or more of the elements of the triple (an element being the predicate, the object, or the subject) is a Uniform Resource Identifier (URI). RDF and other triple formats are premised on the notion of identifying things (i.e. objects, resources or instances) using Web identifiers such as URIs and describing those identified 'things' in terms of simple properties and property values. In terms of the triple, the subject may be a URI identifying a web resource describing an entity, the predicate may be a URI identifying a type of property (for example, colour), and the object may be a URI specifying the particular instance of that type of property that is attributed to the entity in question, in its web resource incarnation. The use of URIs enables triples to represent simple statements, concerning resources, as a graph of nodes and arcs representing the resources, as well as their respective properties and values. An RDF graph can be queried using the SPARQL Protocol and RDF Query Language (SPARQL). It was standardized by the RDF Data Access Working Group (DAWG) of the World Wide Web Consortium, and is considered a key semantic web technology.

The arrow between the data storage apparatus 12 and the dynamic dataflow controller 14 indicates the exchange of data between the two. The dynamic dataflow controller 14 stores and triggers the execution of processor instances which take triples from the data storage apparatus 12 as inputs, and generate output triples that are in turn written back to the data storage apparatus 12.

The dynamic dataflow controller 14 is configured to store a plurality of processor instances, each processor instance specifying an input range, a process, and an output range, each processor instance being configured, when triggered by the provision of an input comprising a triple falling within the input range, to generate an output comprising a triple falling within the output range, by performing the specified process on the input. The processor instances may specify the input range, process, and output range explicitly, or by reference to named entities defined elsewhere. For example, an input range may be defined in an RDF statement stored by the dynamic dataflow controller 14 (or by some other component of the data management apparatus 10 such as a data state transformation detector 16) and given a label. The processor instance may simply state the label, rather than explicitly defining the input range, and the output range may be specified in the same manner. The process may be stored explicitly, for example as processing code or pseudo-code, or a reference to a labelled block of code or pseudo-code stored elsewhere (such as by a generic processor repository 18) may be specified.

The actual execution of the process specified by a processor instance may be attributed to the processor instance itself, to the dynamic dataflow controller 14, or to the actual hardware processor processing the data, or may be attributed to some other component or combination of components.

Processor instances are triggered (caused to be executed) by the dynamic dataflow controller 14 in response to data modification events occurring involving triples falling within the specified input range. The dynamic dataflow controller 14 is configured to respond to a data modification event involving a triple falling within the input range of one of the stored processor instances by providing the triple involved in the data modification event to the one of the stored processor instances as (all or part of) the input. The actual procedure followed by the dynamic dataflow controller 14 in response to being notified that a data modification event has occurred involving a triple falling within the input range of a processor instance may be to add the processor instance or an identification thereof to a processing queue, along with the triple involved in the data modification event (and the rest of the input if required). In that way, the dynamic dataflow controller 14 triggers the processor instance by providing the input. The data modification events may occur outside of the dynamic dataflow controller 14 (for example, by a user acting on the data storage apparatus 12 or by some process internal to the data graph such as reconciliation), or may be the direct consequence of processor instances triggered by the dynamic dataflow controller 14.

Any triples included in the output of a processor instance once executed are written back to the data graph (for example by adding to writing queue). In addition, the dynamic dataflow controller 14 is configured to recognise when the output of an executed processor instance will trigger the execution of another processor instance, and to provide the output in those cases directly to the another processor instance, thus forming a dataflow. In other words, following the generation of the output by the triggered processor instance, to provide a triple comprised in the output as the input to any processor instance, from among the plurality of processor instances, specifying an input range covering the triple comprised in the output. The recognition may take place by a periodic or event-based (an event in that context being, for example, addition of a new processor instance) comparison of input ranges and output ranges specified for each processor instance. Where there is a partial overlap between the output range of one processor instance and the input range of another, the dynamic dataflow controller 14 is configured to store and indication that the two are linked, and on an execution-by-execution basis to determine whether or not the particular output falls within the input range.

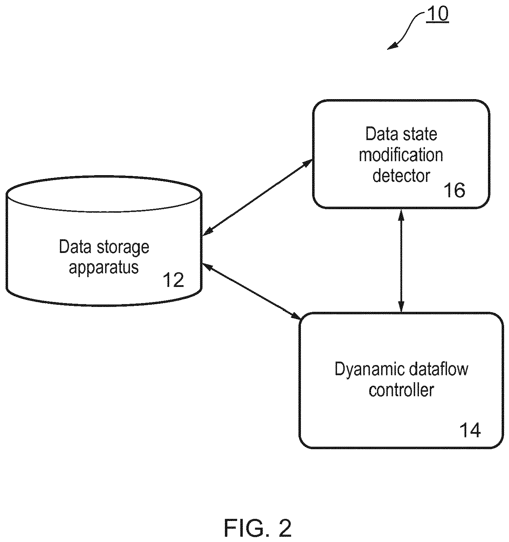

Figure 2 is a schematic illustration of a data management apparatus 10. The description of components common to Figures 1 and 2 is assumed to be the same for both embodiments unless otherwise stated.

In the embodiment of Figure 2, the data management apparatus 10 further comprises a data state modification detector 16. The data state modification detector 16 is configured to monitor or observe the data (triples) stored on the data storage apparatus 12 in order to detect when a data modification event involving a triple included in (which may be termed falling within or covered by) the input range of a processor instance stored on the dynamic dataflow controller 14. The data state modification detector 16, upon detecting any such data modification event, is configured to notify the dynamic dataflow controller 14 at least of the triple involved in the data modification event, and in some implementations also a time stamp of the detected data modification event (or a time stamp of the detection), and/or an indication of a type of the detected data modification event.

The data state modification detector 16 may also be referred to as a data state transformation monitor.

A data modification event involving a triple may include the triple being created, the object value of the triple being modified, or another value of the triple being modified. The triple being created may be as a consequence of a new subject resource being represented in the data graph, or it may be as a consequence of a new interconnection being added to a subject resource already existing in the data graph. Furthermore, a data modification event may include the removal/deletion of a triple from the data graph, either as a consequence of the subject resource of the triple being removed, or as a consequence of the particular interconnection represented by the triple being removed. Furthermore, a triple at the class instance level (i.e. representing a property of an instance of a class) may be created, modified, or removed as a consequence of a class level creation, modification, or removal. In such cases, the data state modification detector 16 is configured to detect (and report to the dynamic dataflow controller 14) both the class level creation/modification/removal, and the creation/modification/removal events that occur at the instances of the modified class. Each of the events described in this paragraph may be considered to be types of events, since they do not refer to an actual individual event but rather to the generic form that those individual events may take.

As an example, the ontology definition of a class may be modified to include a new (initially null or zero) property with a particular label (predicate value). Once the ontology definition of a class is modified by the addition of a new triple with the new label as the predicate value, the same is added to each instance of the class.

The data state modification detector 16 is illustrated as a separate entity from the data storage apparatus 12 and the dynamic dataflow controller 14. It is the nature of the function carried out by the data state modification detector 16 that it may actually be implemented as code running on the data storage apparatus 12. Alternatively or additionally, the data state modification detector 16 may include code running on a controller or other computer or apparatus that does not itself operate as the data storage apparatus 12, but is connectable thereto and permitted to make read accesses. The precise manner in which the data state modification detector 16 is realised is dependent upon the implementation details not only of the detector 16 itself, but also of the data storage apparatus 12. For example, the data storage apparatus 12 may itself maintain a system log of data modification events, so that the functionality of the data state modification detector 16 is to query the system log for events at triples falling within specified input ranges. Alternatively, it may be that the data state modification detector 16 itself is configured to compile and compare snapshots of the state of the data graph (either as a whole or on a portion-by-portion basis) in order to detect data modification events, The interchange of queries, triples, and/or functional code between the data storage apparatus 12 and the data state modification detector 16 is represented by the arrow connecting the two components.

The input ranges within which the data state modification detector 16 is monitoring for data modification events may be defined by a form of RDF statement, which statements may be input by a user either directly to the data state modification detector 16, or via the dynamic dataflow controller 14. The statements may be stored by or at both the data state transformation detector (to define which sections of the data graph to monitor) and at the dynamic dataflow controller 14 (to define which processor instances to trigger), or at a location accessible to either or both. The arrow between the data state modification detector 16 and the dynamic dataflow controller 14 represents an instruction from the dynamic dataflow controller 14 to the data state modification to detect to monitor particular input ranges, and the reporting/informing of data modification events involving triples within those particular input ranges by the data state modification detector 16 to the dynamic dataflow controller 14.

The data state modification detector 16 is configured to detect data modification events and to report them to the dynamic dataflow controller 14. The form of the report is dependent upon implementation requirements, and may be only the modified triple or triples from the data storage apparatus 12. Alternatively, the report may include the modified triple or triples and an indication of the type of the data modification event that modified the triple or triples. A further optional detail that may be included in the report is a timestamp of either the data modification event itself or the detection thereof by the data state modification detector 16 (if the timestamp of the event itself is not available).

Some filtering of the reports (which may be referred to as modification event data items) may be performed, either by the data state modification detector 16 before they are transferred to the dynamic dataflow controller 14, or by the dynamic dataflow controller 14 while the reports are held in a queue, awaiting processing.

The filtering may include removing reports of data modification events of a creation type which are followed soon after (i.e. within a threshold maximum time) by a data modification event of a deletion type of the data identified in the creation type event.

The filtering may also include identifying when, in embodiments in which the data graph includes an ontology definition defining a hierarchy of data items, the queue includes a report of a data modification event including a first resource (or other concept) as the subject of the reported triple that is hierarchically superior (i.e. a parent concept of) one or more other resources included in other reports in the queue. In such cases, the reports including the hierarchically inferior resources (that is to say, the subject resource identified in those triples is a child concept of the first resource) are removed from the queue. Such removal may be on condition of the reports relating to data modification events of the same type.

The filtering may also include identifying when the triples identified in two different reports are semantically equivalent, and removing one of the two reports from the queue. The selection of which report to remove may be based on a timestamp included in the report, for example, removing the least recent report.

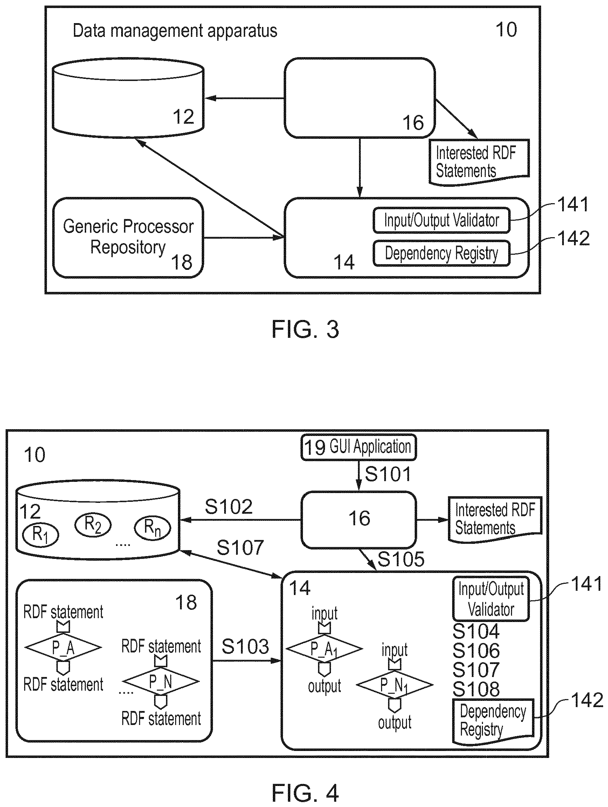

Figure 3 is a schematic illustration of a system architecture of an embodiment. The description of components common to Figure 3 and Figure 1 and/or 2 is assumed to be the same for each embodiment unless otherwise stated. The RDF statements defining the input ranges within which the data state transformation monitor is configured to detect data modification events are illustrated as being external to the data state transformation monitor. This is an indication that a register of such statements is maintained in a location accessible to the data state transformation monitor. In embodiments, that location may be within the data state transformation monitor or external thereto.

Figure 4 illustrates a system architecture of an embodiment annotated with method steps S101 to S108 of an exemplary method. The description of Figure 3 can therefore be applied to Figure 4. Throughout the description of Figure 3, reference will be made to the method step of Figure 4 corresponding to the functionality being described.

An exemplary form of dynamic dataflow controller 14 is illustrated, which includes two functional modules having specific functions, the validator 141 and the dependency registry 142. The validator 141 may also be referred to as the input/output validator 141. The dependency registry 142 may also be referred to as the dependency graph.

In the example of Figure 3, the data storage apparatus 12 is specifically an RDF triple store. The RDF triple store stores all RDF resources of a data graph. The RDF triple store contains both ontology schema definitions (e.g. classes) and instances of the classes.

Statement 1 shows an exemplary class definition triple:

Statement 1:

<http://fujitsu.com/2014#Sensor>        rdf:type rdfs:Class

In a particular implementation example, a temperature sensor may be represented by a resource in the data graph. An exemplary predicate definition for the class Sensor is shown in statement 2 (which is three triples all relating to the same subject resource and hence the subject resource is stated only once):

Statement 2:

<http://fujitsu.com/2014#has_fahrenheit> rdf:type rdf:Property; rdfs:domain <http://fujitsu.com/2014#Sensor>; rdfs:range rdfs:Literal

An instantiation of the class Sensor may be referred to as a sensor resource. For example, sensor_1 may be described by the triple of statement 3:

Statement 3:

<http://fujitsu.com/2014#Sensor/sensor_1> <http://fujitsu.com/2014#has_fahrenheit> 70.1

The generic processor repository 18 is configured to host the generic processors, which are the class-level versions of the processor instances. The generic processor is a class level concept. The storage of generic processors that are instantiated in the dynamic dataflow controller 14 provides extension and flexibility to the process of adding processing capability to the data store. The generic processors contain atomic processes, which are defined processes that define core functionality that is replicated, tailored, and possibly extended by instances of the generic processor. The generic processors may allow only single input and output (i.e. one triple), but other generic processors may also allow multiple input and output. Each of the input or output is a generic RDF statement, which should be implemented by specifying particular value ranges for one or more triple elements (for example, predicate) when the generic processor is instantiated. The instantiation of generic processors by creation of new processor instances at the dynamic dataflow controller 14 is represented by step S103 in Figure 4.

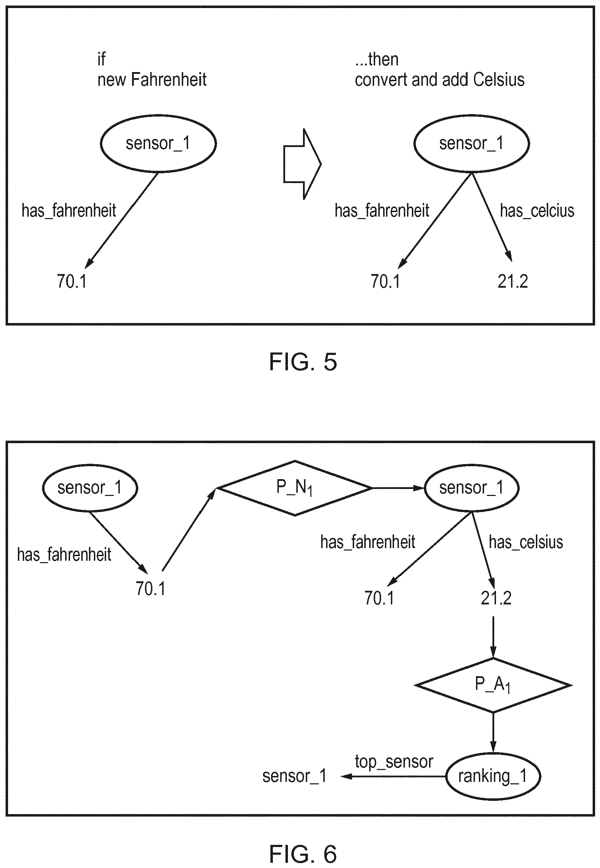

The atomic process is a self-contained computational task to produce certain outcome. For example, converting sensor Fahrenheit value to a Celsius value, or returning the top ten list of sensors according to their Celsius value. A process which can be performed by a processor instance is illustrated in Figure 5.

In the example of Figure 5, a processor instance is triggered by the modification of a triple having the has_farenheit predicate, the process specified by the processor is to convert the object value of the input triple to the equivalent celcius value, and to output a triple having the converted value as the object, has_celcius as the predicate, and the same subject (sensor_1) as the input triple.

Input and output in generic processors are defined by a generic RDF statement, which is a pseudo RDF statement to show the system that a concrete statement is expected at instantiation. A typical generic statement can be:

Statement 4:

?s ?p ?o

It is only a placeholder to be implemented by the specification of a particular range for one or more of the triple elements at instantiation.

The data state modification detector 16 has been described with respect to the embodiment of Figure 1. An exemplary data state modification detector 16 and its role in the particular implementation example involving sensor_1 and the has_farenheit predicate.

The data state modification detector 16 serves three purposes.

Firstly, to allow users to register RDF statements of their interest in particular data items. This statement of interest defines an instance of the class input, which instance can be specified as the input range of a processor instance. For example, a user may be interested in temperature sensors that measure temperature values and store them in the data graph in units of degrees farenheit. Thus, the following RDF statement may be registered with the data state modification detector 16:

Statement 5:

:input1 rdf:type dataflow:Input
:input1 dataflow:usesPredicate
<http://fujitsu.com/2014#has_fahrenheit>

Thus, input1 is defined as an instance of the dataflow:input class, and input1 is an input that will trigger processor instances when a data modification event occurs at a triple having the has_farenheit predicate value. Step S101 of Figure 4 represents the registering of statements defining inputs at the data state modification detector 16. Such registration may be via a GUI application or via a command line, or some other input mechanism.

Secondly, the data state modification detector 16 is configured to apply observers on the resource "sensor_1", and any other resources which are the subject of triples falling within the input range defined by input1, in order to detect state changes (i.e. data modification events). The data state modification detector 16 may also apply observers to identify when new triples are added to the data store falling within the range of input1 (new triples are usually added via one or more distinct write processes that maintain queues that could be monitored by the data state modification detector 16, for example). The observation by the data state modification detector 16 of data state modifications made to the data graph is represented by step S102 in Figure 4.

Thirdly, once any state changes are detected (for example, a modified object value), the data state modification detector 16 will inform the dynamic dataflow controller 14 about the change, and hence the modified triple falling within the input range will be provided to a processor instance specifying input1 as an input range. The informing the dynamic dataflow controller 14 about the change is represented by step S105 in Figure 4.

The dynamic dataflow controller 14 of Figure 3 includes two components each configured to perform a specific function falling within the range of functions performed by the dynamic dataflow controller 14. The two components are the validator 141 and the dependency registry 142. The roles of each component will be explained in the below description of the exemplary dynamic dataflow controller 14 of Figure 3.

The dynamic dataflow controller 14 is configured to construct and store instances of the generic processors, which instances process RDF statements on the inputs and generate results on the outputs. The dynamic dataflow controller 14 is configured to trigger processor instances to be executed upon receiving notifications of data modification events satisfying the input requirements (input ranges) of those processor instances. The triggering of a processor instance following notification of a data modification event satisfying the input requirements of the processor instance is represented by step S106 in Figure 4. Step S107 represents the actual performance of the processing, that is, the carrying out of the processing rules specified by the triggered processor instance. In addition, the dynamic dataflow controller 14 maintains a dependency graph via the dependency registry 142, and defines rules for processing data transformation events, thus to enhance the scalability and efficiency when processing dataflow.

As previously mentioned, the generic processors can have single input and output, multiple input and output, or a combination (i.e. single input with multiple output, or vice versa). Each input and output carries one or more RDF statements each describing a data state in the form of a triple. The input triples relate to data state changes since they are either triples involved in data state modifications detected by the data state modification detector 16, or output by another processor instance. For instance, for the processor instance performing the converting process shown in Figure 5, the input statement utilises the dataflow input instance previously registered with the data state modification detector 16 (statement 5). Thus, the input statement may read as follows (statement 6):

Statement 6:

:input1 rdf:type dataflow:Input
:input1 dataflow:usesPredicate
<http://fujitsu.com/2014#has_fahrenheit>

And the corresponding output statement may be as follows:

Statement 7:

:output1 rdf:type dataflow:Output
:output1 dataflow:usesPredicate <http://fujitsu.com/2014#has_celsius>

The output statement may be explicitly defined by a user. Alternatively, the output statement may be derived in an automated fashion by the dynamic dataflow controller 14, based on the input statement and the processing logic defined for the processor instance. In the example of Figure 5 and statements 6 and 7, the dynamic dataflow controller 14 may interrogate the processing logic for the processor instance and identify that the processor instance generates celcius values having the has_celcius predicate, and thus construct output statement 7.

In this example, the first statement of the inputs and outputs defines the predicate used, e.g. has_fahrenheit. !n some embodiments, the dynamic dataflow controller 14 may be configured to require all inputs and outputs to be specified by defining the predicate. This provides a means of instructing the validator 141, at system runtime, how to validate the incoming input and outgoing output RDF statements.

Note that although all the objects in the Figure 5 are in literal type, they may also be a reference to another resource.

Triples generated as the outputs of triggered processor instances are propagated by the dynamic dataflow controller 14. The propagation includes writing output triples to the data graph stored on the data storage apparatus 12, represented by step S017 of Figure 4.. In addition, the propagation includes links between processor instances, since the input of one processor instance may be defined as the output of another processor instance.

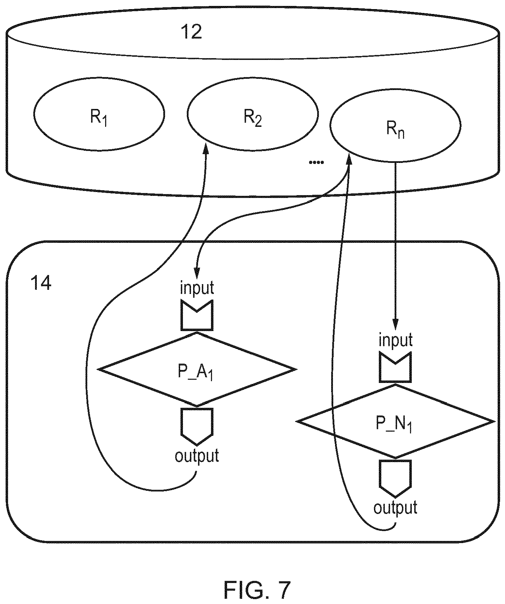

An example of such kind of propagation between processor instances is shown in Figures 6 and 7. In the example of Figures 6 and 7 after processor instance P_N1 creates an output falling within the range defined by statement 7, a P_A1 processing is then triggered against the output value of Celsius. That is to say, processor instance P_A1 has its input specified as the output of P_N1. Alternatively, the dynamic dataflow controller 14 may be configured to compare input and output statements, to recognise when the output of one processor instance falls within the input range of another, and to store a link between the two processor instances (in the dependency registry 142). Thus, the Celsius object of sensor_1 is the input of P_A1 , the output being a triple having as the subject a reference to resource Ranking, the predicate being top_sensor, and the object being a reference to resource sensor_1. The task of the P_A1 is to re-produce the ranking list with top sensor that has highest Celsius for the Ranking resource. Links in which the output of one processor instance becomes the input of another are stored on the dependency registry 142 as a dependency graph.

Processor instances may be represented visually on a graphical user interface application, enabling a user to specify inputs for processor instances by selecting from outputs of stored processor instances. Optionally, a visual representation of the data graph stored by the data storage apparatus 12 may be accessible to the application in order to select inputs from the data graph to include in the input range of a processor instance. Dataflows (connected/linked processor instances) can be constructed and modified by users by adding or removing input/output from the processor instances.

Depending on the implementation details, the validator 141 may be required as an operational component. The validator 141 ensures that a processor instance is performing its process with a correct input statement, and is producing the correct output statement. For example, in the case of a processor instance having an input range defined by statement 6 and an output range defined by statement 7 (and a statement of interest registered with the detector 16 defined by statement 5), the validator 141 is configured to verify that the second statement, the specification of a value for one of the triple elements, conforms to the ontology definition included in the data graph stored by the data storage apparatus 12. Furthermore, at runtime, the validator 141 is configured to check that inputs provided to, and/or outputs generated by, processor instances conform to the specified input range and output range for the processor instance. For example, if processor instance P_N1 produces the following statement 9:

Statement 9:

<http://example.com/sensor_1> <http://fujitsu.com/2014#has_celsius> 21.1

The validator 141 should verify that the output conforms with statement 7. The validation of the input and output of the execution of a processor instance is represented by step S108 of Figure 4.

The dependency registry 142 maintains a dependency graph. The dependency graph sores a graph in which processor instances and resources represented in the data graph are represented by nodes, and interconnections represent data graph resources or properties thereof falling within the input range of a processor instance, and the output of a processor instance falling within the input range of another. This explicit dependency graph thus stores information representing the registration (via statements) of interests in data modification events by processor instances, and, by other data items/resources (via one or more processor instances).

Three exemplary mechanisms for constructing the dependency graph will now be presented:

1. Direct dependencies: one data item in the dependency graph (a data item in the dependency graph may be a processor instance or a resource represented on the data graph) can register itself as the observer of another data item in the dependency graph. This is effectively a push-subscribe mechanism.

2. Indirect dependencies: one data item can register its interest in a particular type of data modification. This can be $\langle *,t,\alpha\rangle$ matching all events of a particular type up to a given time or $\langle T_p,t,\alpha\rangle$ matching all events with respect to all events that are semantically subsuming to $T_p$. Wherein T is the triple, t a time stamp, and $\alpha$ the data modification event type.

3. Inferred dependencies: dependencies can be explicated based on semantic inferences, e.g. owl:same_as or skos:broader_than etc.

Updating the dependency graph is represented by step S104 in Figure 4.

The dependency graph may be stored and maintained in the same way as the data graph stored by the data storage apparatus 12. As the dependency graph can become relatively large (but much smaller in size than the actual data model on which the dependency graph is built), instead of maintaining a single one for all the data items in a data model, data/resource specific ones are constructed and stored together with the resource. Such an individual dependency graph is constructed as follows:

- Start from a data item $d$, following the inverse dependencies of a particular data transformation type, traverse recursively all the data items $\langle d_{0.0},... d_{0.n}\rangle, ..., \langle d_{m,0},..., d_{m,n}\rangle$ where $d_0$ is the direct neighbour of $d$ and $d_i$ ($i > 0$) is the ith indirect neighbours of $d$, e.g. $d_1$ is the neighbours of neighbours of $d_0$ in terms of dependencies.
- Whether an indirectly neighbour $d_k$ should be included is decided based on: given an event $e$, if
  $$e = d_i^{-1}(e') \text{ where } (0 < i < k), \text{ and } d_k(e') = e'', \text{ and } e'' \neq \varnothing \wedge e'' \neq e'.$$

At the interface between the data state modification detector 16 and the dynamic dataflow controller 14, some data state modification events are removed from the queue before they are processed by the dynamic dataflow controller 14. Semantic enhanced rules are applied to reduce multiple events on the same data items being processed individually leading to redundancy and inconsistency. Exemplary rules are defined as follows: given event $\langle T, t, \alpha\rangle$ where $T$ is the triple, $t$ a time stamp, and $\alpha$ the transformation: for $e_i = (T_i, t_i, \alpha_i)$ and $e_j = (T_j, t_j, \alpha_j)$, where $i < j$:

1. If $T_i \sqsubseteq T_j$, $\alpha_i = \alpha_j$, $t_i = t_j$ remove $e_i$,

The assumption is that actions taken upon the parent concept should be given high priority and the removal of those events caused by state transformation of child concepts should not cause significant information loss.

2. If $\alpha_i = deletion$, $t_i \leq t_j$ remove $e_j$,
The rationale is to avoid inconsistency.

3. If $T_i \equiv T_j$, $\alpha_i = \alpha_j$, remove $e_i$,
The assumption is that triples, though can be syntactically different might be semantically equivalent (e.g. through OWL constructs: owl:same_as or SKOS constructs). The actions upon semantically equivalent entities can be collapsed into one.

4. If $\alpha_i = creation$, $\alpha_j = deletion$, , $t_j - t_i \leq \beta$, remove $e_j$ and $e_i$,
By looking ahead in the data state modification event queue, if a data item only survives in a very short period (regulated by $\beta$), both events can be removed. The assumption is that such short-lived events can be due to mistakes or accidents. The removal of both events should not cause significant information loss.

Note that by removing the selected events by the exemplary rules set out above, the system sacrifices its absolute consistency. Information loss to some extent is expected. The assumption is that such data/information loss can be limited to a tolerable extent for improving the overall performance. For the purpose high fidelity transaction or eventual consistency, the removed events can be cached in a separate queue that are handled when the system resource permits.

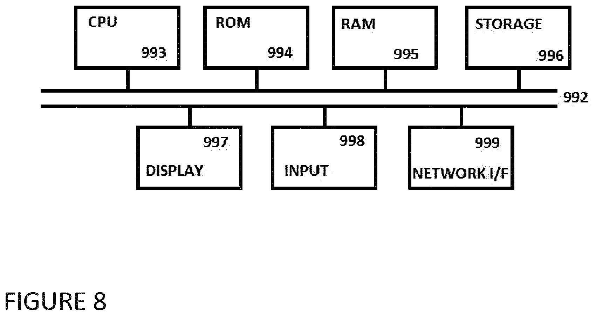

FIGURE 8 is a block diagram of a computing device, such as a data management apparatus 10, which embodies the present invention, and which may be used to implement a method of an embodiment. The data storage apparatus 12 may also have the hardware configuration of Figure 8. The computing device comprises a computer processing unit (CPU) 993, memory, such as Random Access Memory (RAM) 995, and storage, such as a hard disk, 996. Optionally, the computing device also includes a network interface 999 for communication with other such computing devices of embodiments. For example, an embodiment may be composed of a network of such computing devices. Optionally, the computing device also includes Read Only Memory 994, one or more input mechanisms such as keyboard and mouse 998, and a display unit such as one or more monitors 997, The components are connectable to one another via a bus 992.

The CPU 993 is configured to control the computing device and execute processing operations. The RAM 995 stores data being read and written by the CPU 993. The storage unit 996 may be, for example, a non-volatile storage unit, and is configured to store data.

The display unit 997 displays a representation of data stored by the computing device and displays a cursor and dialog boxes and screens enabling interaction between a user and the programs and data stored on the computing device. The input mechanisms 998 enable a user to input data and instructions to the computing device.

The network interface (network I/F) 999 is connected to a network, such as the Internet, and is connectable to other such computing devices via the network. The network I/F 999 controls data input/output from/to other apparatus via the network.

Other peripheral devices such as microphone, speakers, printer, power supply unit, fan, case, scanner, trackerball etc may be included in the computing device.

The data management apparatus 10 may be embodied as functionality realised by a computing device such as that illustrated in Figure 8. The functionality of the data management apparatus 10 may be realized by a single computing device or by a plurality of computing devices functioning cooperatively via a network connection. An apparatus of an embodiment may be realised by a computing device having the hardware setup shown in Figure 8. Methods embodying the present invention may be carried out on, or implemented by, a computing device such as that illustrated in Figure 8. One or more such computing devices may be used to execute a computer program of an embodiment. Computing devices embodying or used for implementing embodiments need not have every component illustrated in Figure 8, and may be composed of a subset of those components. A method embodying the present invention may be carried out by a single computing device in communication with one or more data storage servers via a network.

The data management apparatus 10 may comprise processing instructions stored on a storage unit 996, a processor 993 to execute the processing instructions, and a RAM 995 to store information objects during the execution of the processing instructions.

The data storage apparatus 12 may comprise processing instructions stored on a storage unit 996, a processor 993 to execute the processing instructions, and a RAM 995 to store information objects during the execution of the processing instructions.

The dynamic dataflow controller 14 may comprise processing instructions stored on a storage unit 996, a processor 993 to execute the processing instructions, and a RAM 995 to store information objects during the execution of the processing instructions.

The data state transformation detector 16 may comprise processing instructions stored on a storage unit 996, a processor 993 to execute the processing instructions, and a RAM 995 to store information objects during the execution of the processing instructions.

The validator 141 may comprise processing instructions stored on a storage unit 996, a processor 993 to execute the processing instructions, and a RAM 995 to store information objects during the execution of the processing instructions.

The dependency registry 142 may comprise processing instructions stored on a storage unit 996, a processor 993 to execute the processing instructions, and a RAM 995 to store information objects during the execution of the processing instructions.

The generic processor repository 18 may comprise processing instructions stored on a storage unit 996, a processor 993 to execute the processing instructions, and a RAM 995 to store information objects during the execution of the processing instructions.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored there on a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1. A data management apparatus (10), comprising:

    a data storage apparatus (12) configured to store a data graph representing interconnected resources, the data graph being encoded as a plurality of interconnected data items, each data item comprising a value for each of: a subject, being an identifier of a subject resource; an object, being either an identifier of an object resource or a literal value; and a predicate, being a named relationship between the subject and the object;

    a dynamic dataflow controller (14) comprising a dynamic dataflow controller data storage apparatus, processor hardware, and memory hardware, and configured to store a plurality of processor instances on the dynamic dataflow controller data storage apparatus, each processor instance specifying an input range, a process, and an output range, the input range being specified by an RDF statement and the output range being specified by an Resource Description Framework, hereinafter RDF, statement, each processor instance being configured, when triggered by the provision of an input comprising a data item falling within the input range, to generate an output comprising a data item falling within the output range, by, at the processor hardware, performing the specified process on the input including storing data on the memory hardware during said performing;

    the dynamic dataflow controller (14) being further configured to respond to a data modification event involving a data item falling within the input range of one of the stored processor instances by providing the data item involved in the data modification event to the one of the stored processor instances as the input; wherein

    the dynamic dataflow controller (14) is further configured, following the generation of the output by the triggered processor instance, to provide a data item comprised in the output as the input to any processor instance, from among the plurality of processor instances, specifying an input range covering the data item comprised in the output.

2. A data management apparatus (10) according to claim 1, further comprising:

    a data state modification detector (16) configured to detect a data modification event involving a data item stored on the data storage apparatus (12) and covered by the specified input range of one of the plurality of processor instances, and provide the data item involved in the detected data modification event to the dynamic dataflow controller.

3. A data management apparatus (10) according to claim 2, wherein

the data modification event is one of a predetermined set of data modification event types, and the data state modification detector (16) is configured to provide the data item involved in the detected data modification event to the dynamic data controller along with an indication of which one of the set of data modification event types was detected.

4. A data management apparatus (10) according to claim 3, wherein
the data state modification detector (16) is configured to provide the data item involved in the detected data modification event to the dynamic dataflow controller (14) as a modification event data item also including an indication of which one of the set of data modification event types was detected and an indication of the time of the detected data modification event; and
the dynamic dataflow controller (14) is configured to add the provided modification event data items to a queue from which modification event data items are removed when the included data item is provided as an input to one or more of the processor instances and/or when it is determined by the dynamic dataflow controller (14) not to provide the included data item to any of the processor instances; and wherein
the dynamic dataflow controller (14) is configured to identify pairs of modification event data items in the queue which include semantically equivalent data items, and to remove one of the pair from the queue without providing the data item from the removed data item to a processor instance.

5. A data management apparatus (10) according to claim 2 or 3, wherein
one or more of the processor instances each specify a subset of the set of data modification event types, the dynamic dataflow controller (14) being configured to respond to the detection of a data modification event involving a data item falling within the input range of one of the one or more processor instances specifying a subset of the set of data modification events by:

> if the indication is that the detected data modification event is of a type falling within the subset specified by the one of the processor instances, triggering the processor instance by providing the data item to the processor instance; and
> if the indication is that the detected data modification event is of a type falling outside of the subset specified by the one of the processor instances, blocking the data item from being provided to the processor instance.

6. A data management apparatus (10) according to any of claims 1 to 5, further comprising:

a generic processor repository (18) configured to store a set of class level processor entities that each define a generic input data item, a generic output data item, and a set of processing instructions; and
a processor instantiation interface (19) configured to receive instructions to instantiate a class level processor entity, the instructions including a selection of a class level processor entity from the set of class level processor entities, and a specified input range;
the dynamic dataflow controller (14) being configured to store, as one of the processor instances on the dynamic dataflow controller data storage unit, the specified input range, the set of processing instructions of the selected class level processor entity as the specified process of the processor instance, and a specified output range corresponding to the specified input range.

7. A data management apparatus (10) according to claim 6, wherein
the set of processing instructions defined for the selected class level processor entity are configurable in terms of the process that the set of processing instructions cause to be performed, and the received instructions include one or more configuration instructions defining how the set of processing instructions are configured in the processor instance.

8. A data management apparatus (10) according to claim 6 or 7, wherein
the processor instantiation interface (19) is a graphical user interface, comprising a visual representation of at least a portion of the stored data graph and at least a portion of the stored processor instances, and enabling an input range and/or a process of a new processor instance to be specified by selection from the visual representation.

9. A data management apparatus (10) according to any of claims 1 to 8, wherein
the input range specified by a processor instance is specified by a value range for the predicate and/or by a value range for the subject, a data item being deemed to fall within the input range by having a predicate value falling within the specified predicate value range and/or a subject value falling within the subject value range.

10. A data management apparatus (10) according to any of claims 1 to 9, wherein the dynamic dataflow controller (14) further comprises:

a dependency graph (142) configured to store information in which each of the processor instances is represented by a processor node, and, for each processor instance, each resource in the data graph stored by the data storage apparatus which is the subject resource of a data item covered by the input range specified for the processor instance is represented by a resource node connected to the processor node representing the processor instance as an input, and, each resource in the data graph stored by the data storage apparatus which is the subject resource of a data item covered by the output range specified for the processor instance is represented by a resource node connected to the processor node representing the processor instance as an output.

11. A sensor network comprising a data management apparatus (10) according to any of claims 1 to 10 and a plurality of sensors, each sensor comprising communication means for communicating data to the data management apparatus; wherein
each of the plurality of sensors is a resource represented by the data graph identifiable by a subject value among the plurality of interconnected data items;
the sensor being configured to perform a measurement of a physical property, to generate data representing the measurement, and to communicate the data to the data management apparatus (10);
the data management apparatus (10) being configured to receive the data and to add a new data item to the data graph comprising the subject value identifying the sensor at which the data was generated as the subject, and the data as the object, the addition of the new data item to the data graph being a data modification event;
in the case that a first processor instance from among the plurality of processor instances specifies an input range including the new data item, said first processor instance is configured to perform the specified process on the data item as an input in order to generate a further data item as the output; and
in the case that a second processor instance from among the plurality of processor instances specifies an input range including the further data item, the dynamic dataflow controller (14) is configured to provide the further data item to the second processor instance as an input.

12. A sensor network according to claim 11, wherein the process specified by the first processor instance is a process for normalising, standardising, or otherwise converting the object of the new data item, the further data item comprising as an object the processed object of the new data item.

13. A sensor network according to claim 12, wherein the process specified by the second processor instance is a process for analysing, aggregating, and/or comparing the object of a plurality of input data items.

14. A data management method, comprising:

storing a data graph representing interconnected resources, the data graph being encoded as a plurality of data items, each data item comprising a value for each of: a subject, being an identifier of a subject resource; an object, being either an identifier of an object resource or a literal value; and a predicate, being a named relationship between the subject and the object;
storing, on a data storage apparatus, a plurality of processor instances, each processor instance specifying an input range, a process, and an output range, the input range being specified by an RDF statement and the output range being specified by an RDF statement, each processor instance being configured, when triggered (S106) by the provision (S105) of an input comprising a data item falling within the input range, to generate an output comprising a data item falling within the output range, by, at a processor hardware, performing (S107) the specified process on the input including storing data on a memory during said performing;
responding to a data modification event involving a data item falling within the input range of one of the stored processor instances by providing the data item involved in the data modification event to the one of the stored processor instances as the input; and
following the generation of the output by the triggered processor instance, providing a data item comprised in the output as the input to any processor instance, from among the plurality of processor instances, specifying an input range covering the data item comprised in the output.

15. Software comprising instructions, which, when executed by a computing apparatus, will cause the computing apparatus to perform the method of claim 14.

**Patentansprüche**

1. Datenverwaltungsvorrichtung (10), umfassend:

eine Datenspeichervorrichtung (12), die zum Speichern eines Datengraphen konfiguriert ist, der miteinander verbundene Ressourcen darstellt, wobei der Datengraph als mehrere miteinander verbundene Datenelemente codiert ist, wobei jedes Datenelement einen Wert umfasst für jedes von: einem Subjekt, das eine Bezeichnung einer Subjektressource ist; einem Objekt, das entweder ein Bezeichnung einer Objektressource oder ein Literalwert ist; und einem Prädikat, das eine benannte Beziehung zwischen dem Subjekt und dem Objekt ist;
ein dynamischer Datenflusscontroller (14), der eine dynamische Datenflusscontroller-Datenspeichervorrichtung, Prozessorhardware, und Speicherhardware umfasst, und zum Speichern mehrerer Prozessorinstanzen auf der dynamischen Datenflusscontroller-Datenspeichervorrichtung konfiguriert ist, wobei jede Prozessorinstanz einen Eingabebereich, einen Prozess, und ein Ausgabebereich spezifiziert, wobei der Eingabebereich durch eine RDF-Anweisung spezifiziert ist und der Ausgabebereich durch ein Ressourcenbeschreibungsrahmenwerk, im folgenden RDF-Anweisung bezeichnet, spezifiziert ist, wobei jede Prozessorinstanz konfiguriert ist,
wenn sie durch das Vorsehen einer Eingabe getriggert wird, das das Datenelement innerhalb des Eingabebereichs aufweist, eine Ausgabe zu erzeugen, die ein Datenelement umfasst, das in den Ausgabebereich fällt, indem der spezifizierte Prozess an der Eingabe in der Prozessorhardware ausgeführt wird, einschließlich Speicherns von Daten in der Speicherhardware während der Durchführung;
wobei der dynamische Datenflusskontroller (14) ferner konfiguriert ist, auf ein Datenmodifizierungsereignis zu reagieren, das ein Datenelement umfasst, das in den Eingabebereich einer der gespeicherten Prozessorinstanzen fällt, indem das Datenelement, das in dem Datenmodifizierungsereignis einbezogen ist, einer der gespeicherten Prozessorinstanzen als Eingabe bereitgestellt wird; wobei
der dynamische Datenflusscontroller (14) ferner konfiguriert ist, der Erzeugung der Ausgabe durch die getriggerte Prozessorinstanz folgend ein Datenelement, das in der Ausgabe enthalten ist, für eine beliebige Prozessorinstanz aus den mehreren Prozessorinstanzen, die einen Eingabebereich spezifizieren, der das in der Ausgabe einbezogene Datenelement abdeckt, als die Eingabe bereitzustellen.

2. Datenverwaltungsvorrichtung (10) nach Anspruch 1, ferner umfassend:

einen Datenzustandsmodifizierungsdetektor (16), der konfiguriert ist, ein Datenmodifizierungsereignis zu detektieren, das ein Datenelement einbezieht, das in der Datenspeichervorrichtung (12) gespeichert ist und durch den spezifizierten Eingabebereich von einer der mehreren Prozessorinstanzen abgedeckt ist, und das in dem detektierten Datenmodifizierungsereignis einbezogene Datenelement dem dynamischen Datenflusscontroller bereitzustellen.

3. Datenverwaltungsvorrichtung (10) nach Anspruch 2, wobei

das Datenmodifizierungsereignis einer von einem vorbestimmten Satz von Datenmodifizierungsereignistypen ist, und der Datenzustandsmodifizierungsdetektor (16) konfiguriert ist, das in dem detektierten Datenmodifizierungsereignis einbezogene Datenelement zusammen mit einer Angabe, welcher von dem Satz von Datenmodifizierungsereignistypen detektiert wurde, an den dynamischen Datencontroller bereitzustellen.

4. Datenverwaltungsvorrichtung (10) nach Anspruch 3, wobei

der Datenzustandsmodifizierungsdetektor (16) konfiguriert ist, das Datenelement, das in dem detektierten Datenmodifizierungsereignis einbezogen ist, an den dynamischen Datenflusscontroller (14) als ein Modifizierungsereignis-Datenelement bereitzustellen, das auch eine Angabe, welcher von dem Satz von Datenmodifizierungsereignistypen detektiert wurde, eine Angabe der Zeit des detektierten Datenmodifizierungsereignisses aufweist; und
der dynamische Datenflusscontroller (14) konfiguriert ist, die bereitgestellten Modifizierungsereignis-Datenelemente einer Warteschlange hinzuzufügen, aus der Modifizierungsereignis-Datenelemente entfernt werden, wenn das enthaltene Datenelement als eine Eingabe für eine oder mehrere der Prozessorinstanzen bereitgestellt wird und/oder wenn durch den dynamischen Datenflusscontroller (14) bestimmt wird, das einbezogene Datenelement an keine der Prozessorinstanzen bereitzustellen; und wobei der dynamische Datenflusskontroller (14) konfiguriert ist, Paare von Modifizierungsereignis-Datenelementen, die semantisch äquivalente Datenelemente enthalten, in der Warteschlange zu identifizieren, und eines von dem Paar aus der Warteschlange zu entfernen, ohne das Datenelement von dem entfernten Datenelement an eine Prozessorinstanz zu liefern.

5. Datenverwaltungsvorrichtung (10) nach Anspruch 2 oder 3, wobei

eine oder mehrere der Prozessorinstanzen jeweils eine Teilmenge des Satzes von Datenmodifizierungsereignistypen spezifizieren, wobei die dynamische Datenflusssteuerung (14) konfiguriert ist, auf die Detektion eines Datenmodifizierungsereignisses zu reagieren, das ein Datenelement einbezieht, das in den Eingabebereich einer oder mehrerer Prozessorinstanzen fällt, die eine Teilmenge des Satzes von Datenmodifizierungsereignissen spezifizieren, durch:

wenn die Angabe lautet, dass das detektierte Datenmodifizierungsereignis von einem Typ ist, der in die durch eine der Prozessorinstanzen spezifizierte Teilmenge fällt, Triggern der Prozessorinstanz durch Bereitstellen des Datenelements an die Prozessorinstanz; und
wenn die Angabe lautet, dass das detektierte Datenmodifizierungsereignis von einem Typ ist, der außerhalb der Teilmenge liegt, die durch die eine der Prozessorinstanzen spezifiziert wird, Abhalten des Datenelements davon, der Prozessorinstanz bereitgestellt zu werden.

6. Datenverwaltungsvorrichtung (10) nach einem der Ansprüche 1 bis 5, ferner aufweisend:

ein generisches Prozessor-Repository (18), das zum Speichern eines Satzes von Prozessorentitäten auf Klassenebene konfiguriert ist, die jeweils ein generisches Eingabedatenelement, ein generisches Ausgabedatenelement, und einen Satz von Verarbeitungsanweisungen definieren; und
eine Prozessorinstantiierungsschnittstelle (19), die konfiguriert ist, Anweisungen zum Instantiieren einer Prozessorentität auf Klassenebene zu empfangen, wobei die Anweisungen eine Auswahl einer Prozessorentität auf Klassenebene aus dem Satz von Prozessorentitäten auf Klassenebene und einen spezifizierten Eingabebereich aufweisen;
wobei der dynamische Datenflusscontroller (14) konfiguriert ist, als eine der Prozessorinstanzen in der dynamischen Datenflusscontroller-Datenspeichereinheit, den spezifizierten Eingabebereich, den Satz von Verarbeitungsanweisungen der ausgewählten Klassenebenenprozessorentität als den spezifizierten Prozess der Prozessorinstanz, und einen spezifizierten Ausgabebereich, der dem angegebenen Eingabebereich entspricht, zu speichern.

7. Datenverwaltungsvorrichtung (10) nach Anspruch 6, wobei

der Satz von Verarbeitungsanweisungen, die für die ausgewählte Prozessorentität auf Klassenebene definiert sind, hinsichtlich des Prozesses, den der Satz von Verarbeitungsanweisungen durchführt, konfiguriert werden können, und die empfangenen Anweisungen einen oder mehrere Konfigurationsanweisungen aufweisen, die definieren, wie der Satz von Verarbeitungsanweisungen in der Prozessorinstanz konfiguriert ist.

8. Datenverwaltungsvorrichtung (10) nach Anspruch 6 oder 7, wobei

die Prozessorinstanziierungsschnittstelle (19) eine graphische Benutzerschnittstelle ist, die eine visuelle Darstellung mindestens eines Teils des gespeicherten Datengraphen und mindestens eines Teils der gespeicherten Prozessorinstanzen umfasst, und einen Eingabebereich und/oder einen Prozess einer neuen Prozessorinstanz, die durch Auswahl aus der visuellen Darstellung spezifiziert wird, aktiviert.

9. Datenverwaltungsvorrichtung (10) nach einem der Ansprüche 1 bis 8, wobei

der durch eine Prozessorinstanz spezifizierte Eingabebereich durch einen Wertebereich für das Prädikat und/oder durch einen Wertebereich für das Subjekt spezifiziert ist, wobei ein Datenelement als in den Eingabebereich fallend angesehen wird, wenn es einen Prädikatwert, der in den spezifizierten Prädikatwertbereich fällt, und/oder einen Subjektwert, der in den Subjektwertbereich fällt, aufweist.

10. Datenverwaltungsvorrichtung (10) nach einem der Ansprüche 1 bis 9, wobei der dynamische Datenflusscontroller (14) ferner umfasst:

einen Abhängigkeitsgraphen (142), der zum Speichern von Informationen konfiguriert ist, in denen jede der Prozessorinstanzen durch einen Prozessorknoten dargestellt wird, und, für jede Prozessorinstanz, jede Ressource in dem Datengraphen, die von der Datenspeichervorrichtung gespeichert wird, die die Subjektressource eines Datenelements ist, das durch den für die Prozessorinstanz spezifizierten Eingabebereich abgedeckt wird, durch einen Ressourcenknoten dargestellt wird, der mit dem Prozessorknoten verbunden ist, der die Prozessorinstanz als eine Eingabe darstellt, und jede Ressource in dem Datengraphen, die von der Datenspeichervorrichtung gespeichert wird, die die Subjektressource eines Datenelements ist, das durch den für die Prozessorinstanz spezifizierten Ausgabebereich abgedeckt wird, durch einen Ressourcenknoten dargestellt wird, der mit dem Prozessorknoten verbunden ist, der die Prozessorinstanz als eine Ausgabe darstellt.

11. Sensornetzwerk, umfassend eine Datenverwaltungsvorrichtung (10) nach einem der Ansprüche 1 bis 10 und mehreren Sensoren, wobei jeder Sensor Kommunikationsmittel zum Kommunizieren von Daten an die Datenverwaltungsvorrichtung aufweist; wobei

jeder der mehreren Sensoren eine durch den Datengraphen dargestellte Ressource ist, die durch einen Subjektwert unter den mehreren miteinander verbundenen Datenelementen identifiziert werden kann;

wobei der Sensor konfiguriert ist, eine Messung einer physikalischen Eigenschaft durchzuführen, um Daten zu erzeugen, die die Messung darstellen, und um die Daten an die Datenverwaltungsvorrichtung (10) zu kommunizieren;

wobei die Datenverwaltungsvorrichtung (10) konfiguriert ist, die Daten zu empfangen und ein neues Datenelement dem Datengraphen hinzuzufügen, der den Subjektwert, der den Sensor, bei dem die Daten als das Subjekt erzeugt wurden, identifiziert und die Daten als das Objekt umfasst, wobei die Hinzufügung des neuen Datenelements zu dem Datengraphen ein Datenmodifizierungsereignis ist;

in dem Fall, dass eine erste Prozessorinstanz aus den mehreren Prozessorinstanzen einen Eingabebereich spezifiziert, der das neue Datenelement aufweist, die erste Prozessorinstanz konfiguriert ist, den spezifizierten Prozess an dem Datenelement als eine Eingabe durchzuführen, um weitere Datenelemente als Ausgabe zu erzeugen; und

in dem Fall, dass eine zweite Prozessorinstanz aus den mehreren Prozessorinstanzen einen Eingabebereich spezifiziert, der das weitere Datenelement aufweist, die dynamische Datenflusssteuerung (14) konfiguriert ist, das weitere Datenelement der zweiten Prozessorinstanz als eine Eingabe bereitzustellen.

12. Sensornetzwerk nach Anspruch 11, wobei der durch die erste Prozessorinstanz spezifizierte Prozess ein Prozess zum Normalisieren, Standardisieren, oder anderweitigen Konvertieren des Objekts des neuen Datenelements ist, wobei das weitere Datenelement als ein Objekt das verarbeitete Objekt des neuen Datenelements umfasst.

13. Sensornetzwerk nach Anspruch 12, wobei der durch die zweite Prozessorinstanz spezifizierte Prozess ein Prozess zum Analysieren, Aggregieren und/oder Vergleichen des Objekts mehrerer Eingabedatenelemente ist.

14. Datenverwaltungsverfahren, umfassend:

Speichern eines Datengraphen, der miteinander verbundene Ressourcen darstellt, wobei der Datengraph als mehrere Datenelemente codiert ist, wobei jedes Datenelement einen Wert umfasst für jedes von: einem Subjekt, das eine Bezeichnung einer Subjektressource ist; einem Objekt, das entweder eine Bezeichnung einer Objektressource oder ein Literalwert ist; und einem Prädikat, das eine benannte Beziehung zwischen dem Subjekt und dem Objekt ist;

Speichern mehrerer Prozessorinstanzen in einer Datenspeichervorrichtung, wobei jede Prozessorinstanz einen Eingabebereich, einen Prozess, und einen Ausgabebereich spezifiziert, wobei der Eingabebereich durch eine RDF-Anweisung spezifiziert ist und der Ausgabebereich durch eine RDF-Anweisung spezifiziert ist, wobei jede Prozessorinstanz konfiguriert ist, wenn sie durch Vorsehen (S105) einer Eingabe getriggert wird (S106), die ein Datenelement umfasst, das in den Eingabebereich fällt, eine Ausgabe zu erzeugen, die ein Datenelement umfasst, das in den Ausgabebereich fällt, durch, in einer Prozessorhardware, Durchführen (S107) des spezifizierten Prozesses an der Eingabe einschließlich Speichern von Daten in einem Speicher während des Durchführens;

Reagieren auf ein Datenmodifizierungsereignis, das ein Datenelement umfasst, das in den Eingabebereich einer der gespeicherten Prozessorinstanzen fällt, indem das Datenelement, das an dem Datenmodifizierungsereignis einbezogen ist, an die eine der gespeicherten Prozessorinstanzen als Eingabe bereitgestellt wird; und

auf die Erzeugung der Ausgabe durch die getriggerte Prozessorinstanz folgend, Bereitstellen eines Datenelements, das in der Ausgabe als Eingabe für eine beliebige Prozessorinstanz unter den mehreren Prozessorinstanzen enthalten ist, die einen Eingabebereich spezifizieren, der das in der Ausgabe enthaltene Datenelement abdeckt.

15. Software mit Anweisungen, die, wenn sie von einer Rechenvorrichtung ausgeführt werden, die Rechenvorrichtung veranlassen, das Verfahren nach Anspruch 14 durchzuführen.

## Revendications

1. Appareil de gestion de données (10), comportant :

un appareil de stockage de données (12) configuré de manière à stocker un graphe de données représentant des ressources interconnectées, le graphe de données étant codé sous la forme d'une pluralité d'éléments de données interconnectés, chaque élément de données comportant une valeur pour chacun des éléments parmi : un sujet, correspondant à un identificateur d'une ressource de sujet ; un objet, correspondant à un identificateur d'une ressource d'objet ou à une valeur littérale ; et un prédicat, correspondant à une relation désignée entre le sujet et l'objet ;

un contrôleur de flux de données dynamique (14) comportant un appareil de stockage de données de contrôleur de flux de données dynamique, un matériel de processeur et un matériel de mémoire, et configuré de manière à stocker une pluralité d'instances de processeur sur l'appareil de stockage de données de contrôleur de flux de données dynamique, chaque instance de processeur spécifiant une plage d'entrée, un processus, et une plage de sortie, la plage d'entrée étant spécifiée par une déclaration de cadre RDF et la plage de sortie étant spécifiée par une déclaration de cadre de description des ressources, ci-après « RDF », chaque instance de processeur étant configurée, lors d'un déclenchement par la fourniture d'une entrée comportant un élément de données relevant de la plage d'entrée, de manière à générer une sortie comportant un élément de données relevant de la plage de sortie, en mettant en oeuvre, au niveau du matériel de processeur, le processus spécifié sur l'entrée incluant le stockage des données sur le matériel de mémoire au cours de ladite étape de mise en oeuvre ;

le contrôleur de flux de données dynamique (14) étant en outre configuré de manière à répondre à un événement de modification de données impliquant un élément de données relevant de la plage d'entrée de l'une des instances de processeur stockées en fournissant l'élément de données impliqué dans l'événement de modification de données à celle des instances de processeur stockées, en tant que l'entrée ; dans lequel

le contrôleur de flux de données dynamique (14) est en outre configuré, suite à la génération de la sortie par l'instance de processeur déclenchée, de manière à fournir un élément de données inclus dans la sortie en tant que l'entrée à une quelconque instance de processeur, parmi la pluralité d'instances de processeur, en spécifiant une plage d'entrée couvrant l'élément de données inclus dans la sortie.

2. Appareil de gestion de données (10) selon la revendication 1, comportant en outre :

un détecteur de modification d'état de données (16) configuré de manière à détecter un événement de modification de données impliquant un élément de données stocké sur l'appareil de stockage de données (12) et couvert par la plage d'entrée spécifiée de l'une de la pluralité d'instances de processeur, et à fournir l'élément de données impliqué dans l'événement de modification de données détecté au contrôleur de flux de données dynamique.

3. Appareil de gestion de données (10) selon la revendication 2, dans lequel

l'événement de modification de données correspond à l'un d'un ensemble prédéterminé de types d'événements de modification de données, et le détecteur de modification d'état de données (16) est configuré de manière à fournir l'élément de données impliqué dans l'événement de modification de données détecté, au contrôleur de flux de données dynamique, conjointement avec une indication du type de l'ensemble de types d'événements de modification de données qui a été détecté.

4. Appareil de gestion de données (10) selon la revendication 3, dans lequel

le détecteur de modification d'état de données (16) est configuré de manière à fournir l'élément de données impliqué dans l'événement de modification de données détecté, au contrôleur de flux de données dynamique (14), sous la forme d'un élément de données d'événement de modification, en incluant également une indication du type de l'ensemble de types d'événements de modification de données qui a été détecté, et une indication de l'heure de l'événement de modification de données détecté ; et

le contrôleur de flux de données dynamique (14) est configuré de manière à ajouter les éléments de données d'événement de modification fournis, à une file d'attente de laquelle les éléments de données d'événement de modification sont supprimés lorsque l'élément de données inclus est fourni en tant qu'entrée à une ou plusieurs des instances de processeur et/ou lorsqu'il est déterminé, par le contrôleur de flux de données dynamique (14), qu'il convient de ne pas fournir l'élément de données inclus à l'une quelconque des instances de processeur ; et dans lequel le contrôleur de flux de données dynamique (14) est configuré de manière à identifier des paires d'éléments de données d'événement de modification dans la file d'attente, lesquelles incluent des éléments de données sémantiquement équivalents, et à supprimer l'une des paires de la file d'attente, sans fournir l'élément de données à partir de l'élément de données supprimé à une instance de processeur.

5. Appareil de gestion de données (10) selon la revendication 2 ou 3, dans lequel

une ou plusieurs des instances de processeur spécifient chacune un sous-ensemble de l'ensemble de types d'événements de modification de données, le contrôleur de flux de données dynamique (14) étant configuré de manière à répondre à la détection d'un événement de modification de données impliquant un élément de données relevant de la plage d'entrée de l'une de ladite une ou desdites plusieurs instances de processeur en spécifiant un sous-ensemble de l'ensemble d'événements de modification de données, comme suit :

si l'indication indique que l'événement de modification de données détecté est d'un type relevant du sous-ensemble spécifié par ladite une des instances de processeur, en déclenchant l'instance de processeur en fournissant l'élément de données à l'instance de processeur ; et si l'indication indique que l'événement de modification de données détecté est d'un type ne relevant pas du sous-ensemble spécifié par ladite une des instances de processeur, en bloquant l'élément de données afin qu'il ne soit pas fourni à l'instance de processeur.

6. Appareil de gestion de données (10) selon l'une quelconque des revendications 1 à 5, comportant en outre :

un référentiel de processeurs générique (18) configuré de manière à stocker un ensemble d'entités de processeurs de niveau de classe qui définissent chacune un élément de données d'entrée générique, un élément de données de sortie générique et un ensemble d'instructions de traitement ; et une interface d'instanciation de processeur (19) configurée de manière à recevoir des instructions visant à instancier une entité de processeur de niveau de classe, les instructions incluant une sélection d'une entité de processeur de niveau de classe parmi l'ensemble d'entités de processeurs de niveau de classe, et une plage d'entrée spécifiée ; le contrôleur de flux de données dynamique (14) étant configuré de manière à stocker, en tant que l'une des instances de processeur sur l'unité de stockage de données de contrôleur de flux de données dynamique, la plage d'entrée spécifiée, l'ensemble d'instructions de traitement de l'entité de processeur de niveau de classe sélectionnée en tant que le processus spécifié de l'instance de processeur, et une plage de sortie spécifiée correspondant à la plage d'entrée spécifiée.

7. Appareil de gestion de données (10) selon la revendication 6, dans lequel l'ensemble d'instructions de traitement défini pour l'entité de processeur de niveau de classe sélectionnée est configurable en ce qui concerne le processus dont l'ensemble d'instructions de traitement occasionne la mise en oeuvre, et les instructions reçues incluent une ou plusieurs instructions de configuration définissant la façon dont l'ensemble d'instructions de traitement est configuré dans l'instance de processeur.

8. Appareil de gestion de données (10) selon la revendication 6 ou 7, dans lequel l'interface d'instanciation de processeur (19) est une interface utilisateur graphique comportant une représentation visuelle d'au moins une partie du graphe de données stocké et d'au moins une partie des instances de processeur stockées, et autorisant la spécification d'une plage d'entrée et/ou d'un processus d'une nouvelle instance de processeur par une sélection à partir de la représentation visuelle.

9. Appareil de gestion de données (10) selon l'une quelconque des revendications 1 à 8, dans lequel la plage d'entrée spécifiée par une instance de processeur est spécifiée par une plage de valeurs pour le prédicat et/ou une plage de valeurs pour le sujet, un élément de données étant considéré comme relevant de la plage d'entrée sous l'effet de la présence d'une valeur de prédicat relevant de la plage de valeurs de prédicat spécifiée et/ou d'une valeur de sujet relevant de la plage de valeurs de sujet.

10. Appareil de gestion de données (10) selon l'une quelconque des revendications 1 à 9, dans lequel le contrôleur de flux de données dynamique (14) comporte en outre :

un graphe de dépendance (142) configuré de manière à stocker des informations dans lesquelles chacune des instances de processeur est représentée par un noeud de processeur, et, pour chaque instance de processeur, chaque ressource dans le graphe de données stocké par l'appareil de stockage de données qui correspond à la ressource de sujet d'un élément de données couvert par la plage d'entrée spécifiée pour l'instance de processeur est représentée par un noeud de ressources connecté au noeud de processeur représentant l'instance de processeur en tant qu'une entrée et, chaque ressource dans le graphe de données stocké par l'appareil de stockage de données qui correspond à la ressource de sujet d'un élément de données couvert par la plage de sortie spécifiée pour l'instance de processeur est représentée par un noeud de ressources connecté au noeud de processeur représentant l'instance de processeur en tant qu'une sortie.

11. Réseau de capteurs comportant un appareil de gestion de données (10) selon l'une quelconque des revendications 1 à 10, et une pluralité de capteurs, chaque capteur comportant un moyen de communication pour communiquer des données à l'appareil de gestion de données ; dans lequel

chaque capteur de la pluralité de capteurs correspond à une ressource représentée par le graphe de données identifiable par une valeur de sujet parmi la pluralité d'éléments de données interconnectés ; le capteur étant configuré de manière à mettre en oeuvre une mesure d'une propriété physique, à générer des données représentant la mesure, et à communiquer les données à l'appareil de gestion de données (10) ;

l'appareil de gestion de données (10) étant configuré de manière à recevoir les données et à ajouter un nouvel élément de données au graphe de données comportant la valeur de sujet identifiant le capteur au niveau duquel les données ont été générées, en tant que le sujet, et les données en tant que l'objet, l'ajout du nouvel élément de données au graphe de données correspondant à un événement de modification de données ;

dans le cas où une première instance de processeur, parmi la pluralité d'instances de processeur, spécifie une plage d'entrée incluant le nouvel élément de données, ladite première instance de processeur est configurée de manière à mettre en oeuvre le processus spécifié sur l'élément de données, en tant qu'une entrée, afin de générer un élément de données supplémentaire en tant que la sortie ; et

dans le cas où une seconde instance de processeur, parmi la pluralité d'instances de processeur, spécifie une plage d'entrée incluant l'élément de données supplémentaire, le contrôleur de flux de données dynamique (14) est configuré de manière à fournir l'élément de données supplémentaire à la seconde instance de processeur, en tant qu'une entrée.

12. Réseau de capteurs selon la revendication 11, dans lequel le processus spécifié par la première instance de processeur correspond à un processus destiné à normaliser, standardiser, ou sinon convertir l'objet du nouvel élément de données, l'élément de données supplémentaire comportant, en tant qu'un objet, l'objet traité du nouvel élément de données.

13. Réseau de capteurs selon la revendication 12, dans lequel le processus spécifié par la seconde instance de processeur correspond à un processus destiné à analyser, agréger, et/ou comparer l'objet d'une pluralité d'éléments de données d'entrée.

14. Procédé de gestion de données, comportant les étapes ci-dessous consistant à :

stocker un graphe de données représentant des ressources interconnectées, le graphe de données étant codé sous la forme d'une pluralité d'éléments de données, chaque élément de données comportant une valeur pour chacun des éléments parmi : un sujet, correspondant à un identificateur d'une ressource de sujet ; un objet, correspondant à un identificateur d'une ressource d'objet ou à une valeur littérale ; et un prédicat, correspondant à une relation désignée entre le sujet et l'objet ;

stocker, sur un appareil de stockage de données, une pluralité d'instances de processeur, chaque instance de processeur spécifiant une plage d'entrée, un processus, et une plage de sortie, la plage d'entrée étant spécifiée par une déclaration de cadre RDF et la plage de sortie étant spécifiée par une déclaration de cadre RDF, chaque instance de processeur étant configurée, lors d'un déclenchement (S106) par la fourniture (S105) d'une entrée comportant un élément de données relevant de la plage d'entrée, de manière à générer une sortie comportant un élément de données relevant de la plage de sortie, en mettant en oeuvre (S107), au niveau du matériel de processeur, le processus spécifié sur l'entrée incluant le stockage de données sur une mémoire au cours de ladite étape de mise en oeuvre ;

répondre à un événement de modification de données impliquant un élément de données relevant de la plage d'entrée de l'une des instances de processeur stockées en fournissant l'élément de données impliqué dans l'événement de modification de données à celle des instances de processeur stockées, en tant que l'entrée ; et suite à la génération de la sortie par l'instance de processeur déclenchée, fournir un élément de données inclus dans la sortie en tant que l'entrée à une quelconque instance de processeur, parmi la pluralité d'instances de processeur, en spécifiant une plage d'entrée couvrant l'élément de données inclus dans la sortie.

15. Logiciel comportant des instructions, qui, lorsqu'elles sont exécutées par un appareil informatique, amèneront l'appareil informatique à mettre en oeuvre le procédé selon la revendication 14.

FIG. 1

FIG. 2

FIG. 3

FIG. 4

if
new Fahrenheit

...then
convert and add Celsius

sensor_1

has_fahrenheit

70.1

sensor_1

has_fahrenheit          has_celcius

70.1          21.2

## FIG. 5

sensor_1          $P\_N_1$          sensor_1

has_fahrenheit

70.1

has_fahrenheit          has_celsius

70.1          21.2

$P\_A_1$

sensor_1          top_sensor          ranking_1

## FIG. 6

FIG. 7

FIGURE 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PRAMOD BHATOTIA et al.** Large-scale Incremental Data Processing with Change Propagation. *Hot-Cloud'11 Proceedings of the 3rd USENIX conference on Hot topics in cloud computing,* 01 January 2011